# EUROPEAN PATENT APPLICATION

(11) **EP 4 615 030 A1**
(43) Date of publication of application: **10.09.2025**
(21) Application number: 22963951.3
(22) Date of filing: 03.11.2022
(51) Int. Cl.: H04W 24/02

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/129620
(87) International publication number: WO 2024/092640

(57) **Abstract**

Embodiments of the present invention provide an information processing method and apparatus, a communication device, and a storage medium. The information processing method is executed by a first node, and comprises: receiving first information sent by a UE, wherein the first information is used for indicating related information of QoE configuration.

## Description

### FIELD

The present invention relates to, but is not limited to, the field of radio communication technologies, and in particular to an information processing method, an information processing device, a communication device, and a storage medium.

### BACKGROUND

Quality of experience (Quality of Experience, QoE) represents a service quality experience of a user equipment (UE). In related technologies, the QoE may be reflected by some application layer parameters. QoE measurement collection (QoE Measurement Collection, QMC) is a means for operators to collect QoE parameters of specific services (such as video and/or voice services) from an application layer of a UE based on a network configuration. Operators may utilize QMC to obtain service experiences of UEs in the network, identify UEs with poor experiences and related issues, and/or optimize the UE experiences.

Currently, the QoE is usually measured and collected when the UE is in a radio resource control (Radio Resource Control, RRC) connected state and its application layer is engaged in service. In QoE enhancement, when the UE is performing multicast and broadcast services (Multicast and Broadcast Service, MBS), if the state of the UE changes, the QoE measurement collection at the application layer of the UE will continue.

However, when the UE has a state change from an RRC idle state or an RRC inactive state to the RRC connected state, it may access a new base station while an ongoing QoE measurement is in progress. The new base station does not have the UE context and may perform a new QoE measurement for the UE, which may affect the ongoing QoE measurement, for example, by causing the previous ongoing QoE measurement to be interrupted and/or the previous QoE configuration to be overwritten.

### SUMMARY

Embodiments of the present invention provide an information processing method, an information processing device, a communication device, and a storage medium.

According to a first aspect of embodiments of the present invention, an information processing method is provided, which is performed by a first node and includes:
receiving first information transmitted by a user equipment (UE), where the first information is used to indicate relevant information about a quality of experience (QoE) configuration.

In some embodiments, the first information is determined by the UE based on second information, the second information is used to indicate the relevant information about the QoE configuration, and the second information is received by the UE from a second node.

In some embodiments, the first information includes at least one of the following:
identification information of a second node;
a cell global identification (CGI);
a cell radio network temporary identifier (C-RNTI);
a QoE Reference;
a measurement configuration application layer identifier (UE APP ID);
time-related information;
area scope information, used to indicate an area scope of the QoE configuration;
slice scope information, used to indicate a slice scope of the QoE configuration;
service type information, used to indicate a service type of the QoE configuration; or,
a configuration priority, used to indicate a priority of the QoE configuration.

In some embodiments, the time-related information includes at least one of the following:
a configuration validity time, used to indicate a time duration that the UE saves the QoE configuration after receiving the QoE configuration; or,
a configuration remaining time, used to indicate a remaining time duration for saving the QoE configuration.

In some embodiments, the second information includes at least one of the following:
identification information of the second node;
a CGI;
a C-RNTI;
a QoE reference;
a UE APP ID;
time-related information; or
a configuration priority, used to indicate a priority of QoE configuration.

In some embodiments, the method includes at least one of the following:
determining, based on the first information, whether the QoE configuration needs to be obtained; or,
determining, based on the first information, whether to perform overwriting or reconfiguration of the QoE configuration.

In some embodiments, the method includes: transmitting third information to a second node, where the third information is used to obtain the QoE configuration.

In some embodiments, the transmitting the third information to the second node includes: determining, based on the first information, that the QoE configuration needs to be obtained, and transmitting the third information to the second node.

In some embodiments, the method includes: receiving the QoE configuration transmitted by the second node.

In some embodiments, the QoE configuration includes a configuration priority; and the method includes: determining, based on the configuration priority, whether to perform overwriting or reconfiguration of the QoE configuration.

In some embodiments, the third information includes at least one of the following:
identification information of the second node;
a CGI;
a C-RNTI;
a QoE reference; or
a UE APP ID.

In some embodiments, the first node is a first base station, and the second node is a second base station; or,
the first node is a first base station, and the second node is a core network device; or,
the first node is a first base station, and the second node is an Operation Administration and Maintenance (OAM).

According to a second aspect of embodiments of the present invention, an information processing method is provided, which is performed by a UE and includes:
transmitting first information to a first node, where the first information is used to indicate relevant information about a QoE configuration.

In some embodiments, the method includes:
receiving second information transmitted by a second node, where the second information is used to indicate the relevant information about the QoE configuration; and
saving the second information in a case that the UE enters an RRC idle state or an RRC inactive state.

In some embodiments, the method includes one of the following:
determining the first information based on the second information after the UE switches from the RRC idle state or the RRC inactive state to an RRC connected state; or
determining the first information based on the second information during the process in which the UE switches from the RRC idle state or the RRC inactive state to an RRC connected state.
In some embodiments, the receiving the first information transmitted by the UE includes one of the following:
receiving an RRC message transmitted by the UE, where the RRC message includes the first information, and the RRC message includes an RRC establishment complete message, an RRC resume complete message, or an RRC reconfiguration message; or
receiving a UE information feedback message transmitted by the UE , where the UE information feedback message includes the first information.

In some embodiments, the first information includes at least one of the following:
identification information of the second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

In some embodiments, the time-related information includes at least one of the following:
a configuration validity time, used to indicate a time duration that the UE saves the QoE configuration after receiving the QoE configuration; or,
a configuration remaining time, used to indicate a remaining time duration for saving the QoE configuration.

In some embodiments, the second information includes at least one of the following:
identification information of the second node;
a CGI;
a C-RNTI;
a QoE reference;
a UE APP ID;
time-related information; or
a configuration priority, used to indicate a priority of the QoE configuration.

In some embodiments, the first node is a first base station, and the second node is a second base station; or,
the first node is a first base station, and the second node is a core network device; or,
the first node is a first base station, and the second node is an OAM.

According to a third aspect of embodiments of the present invention, an information processing method is provided, which is performed by a second node and includes:
receiving third information transmitted by a first node, where the third information is used to obtain a QoE configuration.

In some embodiments, the third information is determined by the first node based on first information, the first information is received by the first node from a UE, and the first information is used to indicate relevant information about the QoE configuration.

In some embodiments, the method includes:
transmitting second information to the UE, where the second information is used to indicate the relevant information about the QoE configuration, and the second information is used for the UE to determine the first information.

In some embodiments, the method includes transmitting the QoE configuration to the first node.

In some embodiments, the QoE configuration includes a configuration priority, and the QoE configuration is used for the first node to determine whether to perform overwriting or reconfiguration of the QoE configuration.

In some embodiments, the third information includes at least one of the following:
identification information of the second node;
a CGI;
a C-RNTI;
a QoE reference; or
a UE APP ID.

In some embodiments, the first node is a first base station, and the second node is a second base station; or,
the first node is a first base station, and the second node is a core network device; or,
the first node is a first base station, and the second node is an OAM.

According to a fourth aspect of embodiments of the present invention, an information processing device is provided, including:
a first reception module, configured to receive first information transmitted by a UE, where the first information is used to indicate relevant information about a QoE configuration.

In some embodiments, the first information is determined by the UE based on second information, the second information is used to indicate the relevant information about the QoE configuration, and the second information is received by the UE from a second node.

In some embodiments, the first information includes at least one of the following:
identification information of a second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

In some embodiments, the time-related information includes at least one of the following:
a configuration validity time, used to indicate a time duration that the UE saves the QoE configuration after receiving it; or,
a configuration remaining time, used to indicate a remaining time duration for saving the QoE configuration.

In some embodiments, the second information includes at least one of the following:
identification information of the second node;
a CGI;
a C-RNTI;
a QoE reference;
a UE APP ID;
time-related information; or
a configuration priority, used to indicate a priority of QoE configuration.

In some embodiments, the device includes a first processing module, configured to perform at least one of the following:
determining, based on the first information, whether the QoE configuration needs to be obtained; or,
determining, based on the first information, whether to perform overwriting or reconfiguration of the QoE configuration.

In some embodiments, the device includes: a first transmission module, configured to transmit third information to the second node, where the third information is used to obtain the QoE configuration.

In some embodiments, the first transmission module is configured to determine, based on the first information, that the QoE configuration needs to be obtained, and transmit the third information to the second node.

In some embodiments, the first reception module is configured to receive the QoE configuration transmitted by the second node.

In some embodiments, the QoE configuration includes a configuration priority and the first processing module is configured to determine, based on the configuration priority, whether to perform overwriting or reconfiguration of the QoE configuration.

In some embodiments, the third information includes at least one of the following:
identification information of the second node;
a CGI;
a C-RNTI;
a QoE reference; or
a UE APP ID.

In some embodiments, the first node is a first base station, and the second node is a second base station; or,
the first node is a first base station, and the second node is a core network device; or,
the first node is a first base station, and the second node is an OAM.

According to a fifth aspect of embodiments of the present invention, an information processing device is provided, including:
a second transmission module, configured to transmit first information to a first node, where the first information is used to indicate relevant information about a QoE configuration.

In some embodiments, the device includes:
a second reception module, configured to receive second information transmitted by a second node, where the second information is used to indicate the relevant information about the QoE configuration; and
a second processing module, configured to save the second information in a case that the UE enters an RRC idle state or an RRC inactive state.

In some embodiments, the second processing module is configured to determine the first information based on the second information after the UE switches from the RRC idle state or the RRC inactive state to the RRC connected state; or
the second processing module is configured to determine the first information based on the second information during the process in which the UE switches from the RRC idle state or the RRC inactive state to the RRC connected state.

In some embodiments, the first information includes at least one of the following:
identification information of the second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

In some embodiments, the time-related information includes at least one of the following:
a configuration validity time, used to indicate a time duration that the UE saves the QoE configuration after receiving it; or,
a configuration remaining time, used to indicate a remaining time duration for saving the QoE configuration.

In some embodiments, the second information includes at least one of the following:
identification information of the second node;
a CGI;
a C-RNTI;
a QoE reference;
a UE APP ID;
time-related information; or
a configuration priority, used to indicate a priority of the QoE configuration.

In some embodiments, the first node is a first base station, and the second node is a second base station; or,
the first node is a first base station, and the second node is a core network device; or,
the first node is a first base station, and the second node is an OAM.

According to a sixth aspect of embodiments of the present invention, an information processing device is provided, including:
a third reception module, configured to receive third information transmitted by a first node, where the third information is used to obtain a QoE configuration.

In some embodiments, the third information is determined by the first node based on first information, the first information is received by the first node from a UE, and the first information is used to indicate relevant information about the QoE configuration.

In some embodiments, a third transmission module is configured to transmit second information to the UE, where the second information is used to indicate the relevant information about the QoE configuration, and the second information is used for the UE to determine the first information.

In some embodiments, the device includes: a third transmission module, configured to transmit the QoE configuration to the first node.

In some embodiments, the QoE configuration includes a configuration priority, where the QoE configuration is used by the first node to determine whether to perform overwriting or reconfiguration of the QoE configuration.

In some embodiments, the third information includes at least one of the following:
identification information of the second node;
a CGI;
a C-RNTI;
a QoE reference; or
a UE APP ID.

In some embodiments, the first node is a first base station, and the second node is a second base station; or,
the first node is a first base station, and the second node is a core network device; or,
the first node is a first base station, and the second node is an OAM.

According to a seventh aspect of the present invention, a communication device is provided, including:
a processor; and
a memory, configured to store processor executable instructions;
where the processor is configured to perform the information processing method of any embodiment of the present invention when running the executable instructions.

According to an eighth aspect of the present invention, a computer storage medium is provided, where the computer storage medium is configured to store a computer executable program, and when the executable program is executed by a processor, the information processing method of any embodiment of the present invention is performed.

The technical solutions provided by the embodiments of the present invention may have the following beneficial effects.

In the embodiments of the present invention, the first node receives the first information transmitted by the UE, where the first information is used to indicate the relevant information about the QoE configuration. This enables the first node to determine whether to obtain the QoE configuration or how to obtain the relevant information about the QoE configuration based on the first information, thereby facilitating subsequent obtaining of the QoE configuration or processing on the QoE configuration.

It is to be understood that both the foregoing general description and the following detailed description are illustrative and explanatory only and are not intended to limit the embodiments of the present invention.

### BRIEF DESCRIPTION OF THE DRAWINGS

FIG. 1 is a schematic diagram of a radio communication system according to an illustrative embodiment;
FIG. 2 is a schematic diagram of an information processing method according to an illustrative embodiment;
FIG. 3 is a schematic diagram of an information processing method according to an illustrative embodiment;
FIG. 4 is a schematic diagram of an information processing method according to an illustrative embodiment;
FIG. 5 is a schematic diagram of an information processing method according to an illustrative embodiment;
FIG. 6 is a schematic diagram of an information processing method according to an illustrative embodiment;
FIG. 7 is a schematic diagram of an information processing method according to an illustrative embodiment;
FIG. 8 is a schematic diagram of an information processing method according to an illustrative embodiment;
FIG. 9 is a schematic diagram of an information processing device according to an illustrative embodiment;
FIG. 10 is a schematic diagram of an information processing device according to an illustrative embodiment;
FIG. 11 is a schematic diagram of an information processing device according to an illustrative embodiment;
FIG. 12 is a block diagram of a UE according to an illustrative embodiment; and
FIG. 13 is a block diagram of a base station according to an illustrative embodiment.

### DETAILED DESCRIPTION

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the present invention. Rather, they are merely examples of devices and methods consistent with some aspects of the present invention as recited in the appended claims.

The terms used in the present invention are for the purpose of describing particular embodiments only and are not intended to limit the present invention. The singular forms "a" and "the" used in the present invention and the appended claims are intended to include the plural forms as well, unless otherwise indicated in the context clearly. It should also be understood that the term "and/or" used herein refers to the fact that any or all feasible combinations of one or more of the associated listed items may be included.

It should be understood that although the terms "first", "second", "third", etc., may be used in the present invention to describe various pieces of information, such information should not be limited to these terms. These terms are used only to distinguish pieces of information that are of the same type. For example, without departing from the scope of the present invention, first information may also be referred to as second information, and similarly, second information may also be referred to as first information. Depending on the context, for example, the expression "if" used herein may be interpreted as "in a case that" or "when" or "in response to determining".

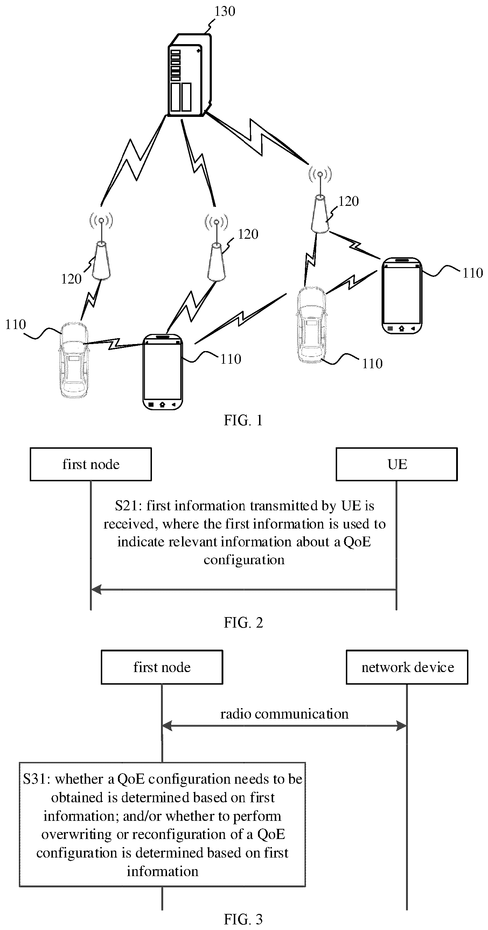

Reference is made to FIG. 1, which is a schematic diagram of a radio communication system according to embodiments of the present invention. As shown in FIG. 1, the radio communication system is a communication system based on cellular mobile communication technology, and the radio communication system may include several UEs 110 and several base stations 120.

The UE 110 may be a device that provides voice and/or data connectivity to a user. The UE 110 may communicate with one or more core networks via a radio access network (RAN), and the UE 110 may be an Internet of Things (IoT) UE, such as a sensor device, a mobile phone (or called a "cellular" phone) and a computer including an IoT UE. For example, the UE 110 may be a fixed device, a portable device, a pocket device, a handheld device, a computer built-in device or a vehicle-mounted device. For example, the UE 110 may be a station (STA), a subscriber unit, a subscriber station, a mobile station, a mobile, a remote station, an access point, a remote terminal, an access terminal, a user terminal, a user agent, a user device, or a user equipment. Or, the UE 110 may also be a device of an unmanned aerial vehicle. Or, the UE 110 may be a vehicle-mounted device, for example, it may be a trip computer with a radio communication function, or a radio communication device connected externally to the trip computer. Or, the UE 110 may be a roadside device, for example, it may be a street lamp, a signal lamp, or other roadside device with a radio communication function.

The base station 120 may be a network device in the radio communication system. The radio communication system may be a 4th generation (4G) mobile communication system, also known as a long term evolution (LTE) system, or the wireless communication system may be a 5G system, also called a new radio (NR) system or 5G NR system. Or, the radio communication system may be a next-generation system of the 5G system. An access network in the 5G system is called a new generation-radio access network (NG-RAN).

The base station 120 may be an evolved node B (eNB) in a 4G system. Or, the base station 120 may be a next-generation node B (gNB) adopting a centralized and distributed architecture in the 5G system. When the base station 120 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a medium access control (MAC) layer. The distributed unit is provided with a physical (PHY) layer protocol stack. The specific implementation of the base station 120 is not limited in the embodiments of the present invention.

A wireless connection may be established between the base station 120 and the UE 110 through a wireless air interface. In different embodiments, the wireless air interface is a wireless air interface based on the fourth generation (4G) mobile communication network technology standard; or the wireless air interface is a wireless air interface based on the fifth generation (5G) mobile communication network technology standard, such as new radio; or the wireless air interface is a wireless air interface based on a next-generation (from 5G) mobile communication network technology standard.

In some embodiments, an end-to-end (E2E) connection is established between the UEs 110, for example, vehicle to everything (V2X) communication, such as vehicle to vehicle (V2V) communication, vehicle to infrastructure (V2I) communication and vehicle to pedestrian (V2P) communication.

The UE described above may be the UE in the embodiments described in the following.

In some embodiments, the radio communication system in the above may further include a network management device 130.

Several base stations 120 are connected to the network management device 130. The network management device 130 may be a core network device in the radio communication system, for example, the network management device 130 may be a mobility management entity (MME) in an evolved packet core (EPC) network. Or, the network management device may be other core network device, such as a serving gateway (SGW), a public data network gateway (PGW), a policy and charging rule function (PCRF) unit or a home subscriber server (HSS), etc. Or, the core network device may be a core network device in 5G, for example, it may be an access and mobility management function (AMF), a policy control function (PCF), or a session management function (SMF). The implementation form of the network management device 130 is not limited in the embodiments of the present invention.

In order to facilitate understanding for those skilled in the art, multiple implementations are provided to clearly describe the technical solution of the embodiments of the present invention. Those skilled in the art can understand that the multiple implementations provided for the embodiments of the present invention may be executed alone or in combination with the methods of other embodiments of the present invention. The embodiments executed alone or in combination may further be executed together with some methods of other related technologies, which are not limited in the embodiments of the present invention.

It should be noted that when multiple execution entities are involved in the embodiments of the present invention, and in a case that an execution entity performs a transmission to another execution entity, it may refer to the execution entity performing the transmission directly to the another execution entity, or it may refer to the execution entity performing the transmission to the another execution entity via any other device, which is not limited in the embodiments of the present invention.

In order to better understand the technical solution described in any embodiment of the present invention, a partial description of the related technologies is provided.

For NR QoE of R17, since the supported services include video streaming services, voice services and virtual reality (VR), QoE measurement collection and reporting of QoE measurement results are usually performed only in an RRC connected state (RRC_CONNECTED).

QMC may be based on a configuration directly from an OAM system (e.g., management-based QoE measurement), or based on signaling from an OAM via a core network (e.g., signaling-based QoE measurement).

For the signaling-based QoE measurement, the OAM initiates QoE measurement activation for a specific UE via the core network, and a node in the 5G radio access network (NG-RAN) receive one or more QoE configurations via a UE-related signaling. The signaling-based QoE configuration includes an application layer measurement configuration list and corresponding information for QoE measurement collection, such as a QoE reference, a service type, a measurement collection entity (Measurement Collection Entity, MCE) IP address, a slice scope, an area scope, minimization of drive-tests (Minimization of drive-tests, MDT) alignment information and indication of available RAN visible QoE metrics (RVQoE metrics). The NG-RAN node forwards the corresponding QoE configuration to the UE via a downlink RRC message.

For the management-based QoE measurement, the OAM transmits one or more QoE configurations to the NG-RAN node (the QoE configuration may be a configuration for a QoE measurement, that is, may be a QoE measurement configuration). The management-based QoE configuration may include an application layer measurement configuration list and corresponding information for QoE measurement collection. The NG-RAN node selects UE(s) that meet the QoE measurement capability, an area scope and a slice scope, and performs QoE configuration for the QoE measurement on the UE.

In NR QoE enhancement of R18, it is decided to support QoE measurement and collection of MBS services. A UE may perform MBS services in an RRC connected state, an RRC idle state (RRC_IDLE) and an RRC inactive state (RRC _INACTIVE). When the UE is engaged in MBS services, if the state of the UE changes, QoE collection at the application layer of the UE will continue.

If the UE switches from the RRC idle state or the RRC inactive state to the RRC connected state, it may access a new base station. In a case that there is an ongoing QoE measurement, the new base station does not have the UE context, and the new base station may perform new QoE configuring for the UE. This may result in interruption of the ongoing QoE measurement and overwriting of the previous QoE configuration. How to avoid affecting the ongoing QoE measurement when the UE accesses the new base station from the RRC_IDLE state is an issue to be addressed.

As shown in FIG. 2, embodiments of the present invention provide an information processing method, which is performed by a first node and includes the following step.

Step S21: first information transmitted by a UE is received, where the first information is used to indicate relevant information about a QoE configuration.

The UE may be any mobile terminal or fixed terminal. For example, the UE may be, but is not limited to, a mobile phone, a computer, a server, a wearable device, a game control platform, a multimedia device, or any sensor, etc.

A state of the UE includes: an RRC idle state, an RRC inactive state or an RRC connected state.

Each of the first node and the second node may be an access network device. The access network device may be, but is not limited to, a base station. The base station may be any type of base station, for example, the base station may be, but is not limited to, at least one of the following: a 3G base station, a 4G base station, a 5G base station or other evolved base station. Or, each of the first node and the second node may be a logical node or function or an entity implementing a function, which is flexibly arranged in the access network, etc.

In an embodiment, the first node is a first base station and the second node is a second base station.

In another embodiment, the first node is a first base station, and the second node is a core network device.

In yet another embodiment, the first node is a first base station, and the second node is an OAM.

The first base station is a destination base station, and the second base station is a source base station; or the first base station is a master node (Master Node, MN), and the second base station is a secondary node (Secondary Node, SN); or the first base station and the second base station may be any two base stations.

In an embodiment, the second node may be a base station that last serves the UE or a base station that transmits the QoE configuration to the UE.

The core network device may be a logical node or function or an entity implementing a function, which is flexibly arranged in the access network, etc.; for example, the core network device may be but is not limited to an AMF.

Any relevant information related to the QoE configuration may be the first information. Embodiments of the present invention provides an information processing method, which is performed by a first node and includes: receiving first information related to a QoE configuration that is transmitted by a UE.

In an embodiment, the first information or the relevant information about the QoE configuration is used for the first node to obtain the QoE configuration. The QoE configuration obtained by the first node is the QoE configuration indicated in the first information.

In another embodiment, the first information or the relevant information about the QoE configuration is used for the first node to determine whether to perform overwriting or reconfiguration of the QoE configuration. The performing reconfiguration of the QoE configuration may include: performing a new QoE configuration.

The QoE configuration is used to indicate a configuration for a QoE measurement; the QoE configuration may be any information configured for the QoE measurement.

In some embodiments, the first information includes but is not limited to at least one of the following:
identification information of the second node;
a cell global identification (CGI);
a cell radio network temporary identifier (C-RNTI);
a QoE Reference;
a measurement configuration application layer identifier (UE APP ID);
time-related information;
area scope information, used to indicate an area scope (Area scope) of the QoE configuration;
slice scope information, used to indicate a slice scope (Slice Scope) of the QoE configuration;
service type information, used to indicate a service type of the QoE configuration; or
a configuration priority, used to indicate a priority of the QoE configuration.

The identification information of the second node is used to uniquely identify the second node; the CGI is used to uniquely identify a cell; the C-RNTI is used to uniquely identify the UE in a cell; the quality of experience reference is used to uniquely identify a measurement task of the QoE configuration in the entire network; and the measurement configuration application layer identifier is used to uniquely identify a measurement task of the QoE configuration within the UE. Each of the identification information and the identifier in the above may be represented by a character or a string; the string includes multiple characters; the character includes but is not limited to a number, a letter and/or a symbol, etc. In the embodiments of the present invention, multiple refers to two or more than two.

The configuration priority may include a priority value or a priority type.

In some embodiments, the time-related information includes at least one of the following:
a configuration validity time, used to indicate a time duration that the UE saves the QoE configuration after receiving the QoE configuration; or,
a configuration remaining time, used to indicate a remaining time duration for saving the QoE configuration.

In the embodiments of the present invention, the first node receives the first information transmitted by the UE, where the first information is used to indicate the relevant information about the QoE configuration. This enables the first node to determine whether to obtain the QoE configuration or how to obtain the relevant information about the QoE configuration based on the first information, thereby facilitating subsequent obtaining of the QoE configuration or processing on the QoE configuration.

Furthermore, in the embodiments of the present invention, in a case that the state of the UE changes (such as switching from the RRC idle state or the RRC inactive state to the RRC connected state), the new base station (i.e., the first node) can obtain the QoE configuration based on the relevant information about the QoE configuration; and determine whether to perform a new QoE configuration or overwriting based on the QoE configuration, thereby reducing the impact on the ongoing QoE measurement in the scenario where the state of the UE changes.

In addition, the second node for configuring the QoE configuration for the UE may be determined based on the identification information of the second node in the first information; and/or the cell for configuring the QoE configuration for the UE and the identifier of the UE in the cell may be determined based on the CGI and the C-RNTI in the first information; and/or different QoE measurement tasks corresponding to the QoE configuration configured for the UE may be determined based on the quality of experience reference and the measurement configuration application layer identifier in the first information; and/or the time duration for saving the QoE configuration after the UE receives the QoE configuration and/or the remaining time duration for saving the QoE configuration may be determined based on the time information (including the configuration validity time and the configuration remaining time); and/or the area scope and the slice scope to which the QoE configuration configured for the UE is applicable may be determined based on the area scope information and the slice scope information; and/or the service type of the QoE configuration configured for the UE may be determined based on the service type information; and/or the priority of the QoE configuration configured for the UE may be determined based on the configuration priority. In this way, one or more pieces of information of the first information received by the first node enables the first node to accurately determine whether the QoE configuration needs to be obtained or whether it is needed to overwrite and/or reconfigure the QoE configuration.

In some embodiments, the receiving the first information transmitted by the UE in step S21 includes: receiving an RRC message transmitted by the UE, where the RRC message includes the first information.

Embodiments of the present invention provide an information processing method, which is performed by a first node and includes: receiving an RRC message transmitted by a UE, where the RRC message includes first information.

In an embodiment, the RRC message includes but is not limited to one of the following: an RRC establishment complete message, an RRC resume complete message, a UE information feedback message, or an RRC reestablishment complete message.

Embodiments of the present invention provide an information processing method, which is performed by a first node and includes: receiving a UE information feedback message transmitted by a UE, where the UE information feedback message includes first information.

In an embodiment, during the change of the state of the UE (such as switching from the RRC idle state or the RRC inactive state to the RRC connected state), the first information is included in the RRC establishment complete message or the RRC resume complete message and then transmitted.

In another embodiment, after the change of the state of the UE (such as switching from the RRC idle state or the RRC inactive state to the RRC connected state), the first information is included in the UE information feedback message or the RRC reconfiguration completion message and then transmitted.

In the embodiments of the present invention, the first node may receive the first information via the RRC message, so that two functions may be implemented via one RRC message. In this way, the utilization rate of the RRC message is improved and signaling overhead is reduced.

It should be noted that those skilled in the art can understand that the method provided in the embodiments of the present invention may be performed alone or together with some methods in the embodiments of the present invention or some methods in related technologies.

In some embodiments, the first information is determined by the UE based on second information, and the second information is used to indicate the relevant information about the QoE configuration; the second information is information received by the UE from the second node.

In an embodiment, the first information is determined after the UE switches from the RRC idle state or the RRC inactive state to the RRC connected state.

In another embodiment, the first information is determined during a process in which the UE switches from the RRC idle state or the RRC inactive state to the RRC connected state.

In this way, during the change of the state of the UE or after the change of the state of the UE (for example, from the RRC idle state or the RRC inactive state to the RRC connected state), the new base station (i.e., the first node) can receive the first information, which facilitates subsequent obtaining of the QoE configuration and/or determining of whether to overwrite and/or reconfigure the QoE configuration based on the first information. In this way, the impact of the change of the state of the UE on the QoE measurement is reduced.

In other embodiments, the first information may be determined by the UE before the change of the state of the UE (for example, from the RRC idle state or the RRC inactive state to the RRC connected state).

In an embodiment, after the UE enters the RRC idle state or the RRC inactive state, the UE saves the second information.

In some embodiments, the second information includes at least one of the following:
identification information of the second node;
a CGI;
a C-RNTI;
a QoE reference;
a UE APP ID;
time-related information; or
a configuration priority, used to indicate a priority of the QoE configuration.

In an embodiment, the time-related information includes a configuration validity time and/or a configuration remaining time.

In some other embodiments, the second information may include but is not limited to at least one of the following: a C-RNTI, area scope information, slice scope information, or service type information.

In an embodiment, at least part of the second information is the same as at least part of the first information.

In some embodiments, the second information is included in an RRC message transmitted by the second node to the UE; the RRC message may be, but is not limited to, an RRC reconfiguration message or an RRC release message.

In the embodiments of the present invention, the first information may be determined by the UE based on the second information, and the second information is received by the UE from the second node. In this way, the UE can determine the first information related to the QoE configuration for transmitting to the first node, which facilitates subsequent obtaining by the first node the QoE configuration configured by the second node for the UE.

It should be noted that those skilled in the art can understand that the method provided in the embodiments of the present invention may be performed alone or together with some methods in the embodiments of the present invention or some methods in related technologies.

As shown in FIG. 3, embodiments of the present invention provide an information processing method, which is performed by a first node and includes the following step.

Step S31: whether a QoE configuration needs to be obtained is determined based on first information; and/or whether to perform overwriting or reconfiguration of a QoE configuration is determined based on first information.

In some embodiments of the present invention, the first node and the second node are respectively the first node and the second node in the above embodiments; the first information is the first information in the above embodiments; and the QoE configuration is the QoE configuration in the above embodiments.

Embodiments of the present invention provide an information processing method, which is performed by a first node and includes: obtaining a QoE configuration from a second node based on first information.

In some embodiments, the determining, based on the first information, whether the QoE configuration needs to be obtained includes but is not limited to at least one of the following:
whether the QoE configuration needs to be obtained is determined based on identification information of the second node;
whether the QoE configuration needs to be obtained is determined based on a CGI;
whether the QoE configuration needs to be obtained is determined based on a C-RNTI;
whether the QoE configuration needs to be obtained is determined based on a quality of experience reference;
whether the QoE configuration needs to be obtained is determined based on a measurement configuration application layer identifier;
whether the QoE configuration needs to be obtained is determined based on time-related information;
whether the QoE configuration needs to be obtained is determined based on area scope information;
whether the QoE configuration needs to be obtained is determined based on slice scope information;
whether the QoE configuration needs to be obtained is determined based on service type information; or
whether the QoE configuration needs to be obtained is determined based on a configuration priority.

Based on the identification information of the second node, the first node may determine to obtain the QoE configuration from the second node corresponding to the identification information.

In some embodiments, the first node may obtain the corresponding QoE configuration from the second node based on the identification information of the second node, the CGI, the C-RNTI, the QoE reference, and/or the measurement configuration application layer identifier.

In some embodiments, the determining, based on the first information, whether to perform overwriting or reconfiguration of the QoE configuration includes but is not limited to at least one of the following:
determining whether to perform overwriting or reconfiguration of the QoE configuration based on the identification information of the second node;
determining whether to perform overwriting or reconfiguration of the QoE configuration based on the CGI;
determining whether to perform overwriting or reconfiguration of the QoE configuration based on the C-RNTI;
determining whether to perform overwriting or reconfiguration of the QoE configuration based on the quality of experience reference;
determining whether to perform overwriting or reconfiguration of the QoE configuration based on the measurement configuration application layer identifier;
determining whether to perform overwriting or reconfiguration of the QoE configuration based on the time-related information;
determining whether to perform overwriting or reconfiguration of the QoE configuration based on the area scope information;
determining whether to perform overwriting or reconfiguration of the QoE configuration based on the slice scope information;
determining whether to perform overwriting or reconfiguration of the QoE configuration based on the service type information; or
determining whether to perform overwriting or reconfiguration of the QoE configuration based on the configuration priority.

Illustratively, if the first information includes the identification information of the second node, the first node may obtain the QoE configuration from the second node corresponding to the identification information.

Illustratively, if the first information includes the CGI, the first node may obtain the QoE configuration from a cell under the second node corresponding to the CGI based on the CGI.

Illustratively, if the first information includes the CGI and the C-RNTI, the first node may obtain the QoE configuration of the corresponding UE from a cell under the second node corresponding to the first information based on the first information.

Illustratively, if the first information includes the QoE reference, the first node may obtain the QoE configuration corresponding to the QoE reference from the second node based on the first information.

Illustratively, if the first information includes the C-RNTI and the UE APP ID, the first node may obtain the QoE configuration corresponding to the UE APP ID of the UE from the second node based on the first information.

Illustratively, if the first information includes the time-related information and the time-related information includes the configuration validity time, the first node determines whether the current time is within the time duration for saving the QoE configuration indicated by the configuration validity time; if so, it is determined that the QoE configuration needs to be obtained; if not, it is determined that the QoE configuration does not need to be obtained and the QoE configuration may be overwritten and/or reconfigured. Or, if the first information includes the time-related information and the time-related information includes the configuration remaining time, the first node determines whether the current time is within the remaining time duration for saving the QoE configuration indicated by the configuration remaining time; if so, it is determined that the QoE configuration needs to be obtained; if not, it is determined that the QoE configuration does not need to be obtained and the QoE configuration may be overwritten and/or reconfigured.

Illustratively, if the first information includes the area scope information, the first node determines whether the current area scope where the UE is located is within the area scope indicated by the area scope information; if so, it is determined that the QoE configuration needs to be obtained; if not, it is determined that the QoE configuration does not need to be obtained and the QoE configuration may be overwritten and/or reconfigured.

Embodiments of the present invention provide an information processing method, which is performed by a first node and includes: determining whether to release a QoE configuration based on first information.

Thus, in the embodiments of the present invention, it is feasible to accurately determine whether the QoE configuration needs to be obtained, or whether it is needed to overwrite and/or reconfigure and/or release the QoE configuration, etc., based on one or more pieces of information included in the first information.

It should be noted that those skilled in the art can understand that the method provided in the embodiments of the present invention may be performed alone or together with some methods in the embodiments of the present invention or some methods in related technologies.

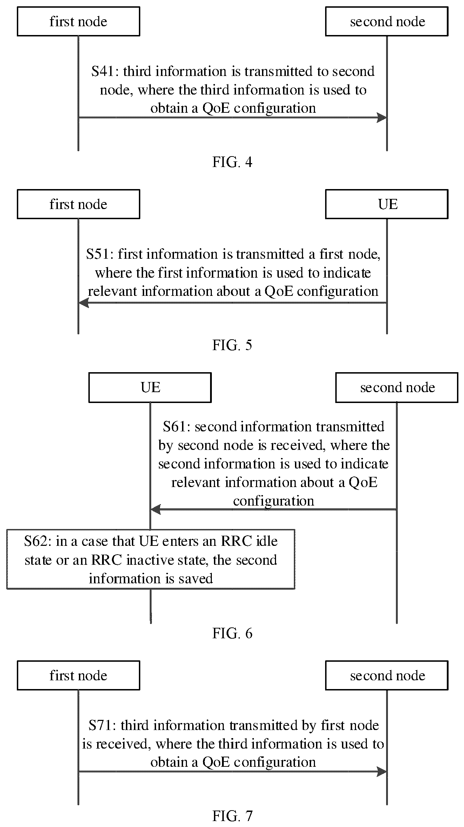

As shown in FIG. 4, embodiments of the present invention provide an information processing method, which is performed by a first node and includes the following step.

Step S41: third information is transmitted to a second node, where the third information is used to obtain a QoE configuration.

In some embodiments of the present invention, the first node and the second node are respectively the first node and the second node in the above embodiments, and the QoE configuration may be the QoE configuration in the above embodiments.

In some embodiments, the transmitting the third information to the second node in step S41 includes:
transmitting the third information to the second node based on the received first information.

In some embodiments, the transmitting the third information to the second node in step S41 includes:
determining, based on the first information, that the QoE configuration needs to be obtained, and transmitting the third information to the second node.

Embodiments of the present invention provide an information processing method, which is performed by a first node and includes: determining that a QoE configuration needs to be obtained based on first information, and transmitting third information to a second node.

In an embodiment, the transmitting the third information to the second node includes: transmitting the third information to the second node based on identification information of the second node in the first information.

In some embodiments, the third information includes at least one of the following:
identification information of the second node;
a CGI;
a C-RNTI;
a QoE reference; or
a UE APP ID.

In other embodiments, the third information includes but is not limited to at least one of the following: time-related information, area scope information, slice scope information, service range information, or a configuration priority.

In an embodiment, at least part of the third information is the same as at least part of the first information.

Embodiments of the present invention provide an information processing method, which is performed by a first node and includes: receiving a QoE configuration transmitted by a second node.

The second node transmits the QoE configuration to the first node based on the received third information.

In the embodiments of the present invention, the first node may transmit the third information to the second node so as to obtain the QoE configuration configured by the second node for the UE. Furthermore, the QoE configuration configured by the second node for the UE can be accurately obtained based on one or more pieces of information included in the third information.

In some embodiments, the QoE configuration includes a configuration priority and the method includes: determining, based on the configuration priority, whether to perform overwriting or reconfiguration of the QoE configuration.

Embodiments of the present invention provide an information processing method, which is performed by a first node and includes: determining, based on a configuration priority, whether to perform overwriting or reconfiguration of a QoE configuration.

Illustratively, if the first information of the first node does not include the configuration priority, the first node may obtain the configuration priority from the second node. After the first node obtains the configuration priority, it may determine whether to perform overwriting or reconfiguration of the QoE configuration based on a priority of a QoE configuration that the first node needs to configure and a priority of the QoE indicated by the configuration priority. For example, if the priority of the QoE configuration that the first node needs to configure is higher than the priority of the QoE configuration indicated by the configuration priority, it is determined to perform overwriting or reconfiguration of the QoE configuration; or, if the priority of the QoE configuration that the first node needs to configure is lower than or equal to the priority of the QoE configuration indicated by the configuration priority, it is determined not to perform overwriting or reconfiguration of the QoE configuration.

In the embodiments of the present invention, the configuration priority may be a configuration type. For example, the configuration type may be a signaling-based QoE configuration (s-based QoE for short) or a management-based QoE configuration (m-based QoE for short). Illustratively, the s-based QoE configuration has a higher priority than the m-based QoE configuration.

In the embodiments of the present invention, the first node may obtain the configuration priority indicating the priority of the QoE configuration from the second node, so as to determine whether to perform overwriting or reconfiguration of the QoE configuration based on the configuration priority.

It should be noted that those skilled in the art can understand that the method provided in the embodiments of the present invention may be performed alone or together with some methods in the embodiments of the present invention or some methods in related technologies.

Description of the information processing method described in the following, which is performed by a UE, is similar to the description of the information processing method performed by the first node in the above; in addition, for technical details not provided in the embodiments of the information processing method performed by the UE, reference is made to the description of the examples of the information processing method performed by the first node, which is not further described in detail herein.

As shown in FIG. 5, embodiments of the present invention provide an information processing method, which is performed by a UE and includes the following step.

Step S51: first information is transmitted to a first node, where the first information is used to indicate relevant information about a QoE configuration.

In some embodiments of the present invention, the first node and the second node may be the first node and the second node in the above embodiments respectively; the first information may be the first information in the above embodiments; and the QoE configuration may be the QoE configuration in the above embodiments.

Illustratively, the first node is a first base station, and the second node is a second base station.

Illustratively, the first node is a first base station, and the second node is a core network device.

Illustratively, the first node is a first base station, and the second node is an OAM.

Illustratively, the first base station is a destination base station, and the second base station is a source base station; or the first base station is a master node (Master Node, MN), and the second base station is a secondary node (Secondary Node, SN); or the first base station and the second base station may be any two base stations.

Illustratively, the second node may be a base station that last serves the UE or a base station that transmits the QoE configuration to the UE.

Illustratively, the first information includes at least one of the following:
identification information of the second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or,
a configuration priority, used to indicate a priority of the QoE configuration.

Illustratively, the time-related information includes at least one of the following:
a configuration validity time, used to indicate a time duration that the UE saves the QoE configuration after receiving it; or
a configuration remaining time, used to indicate a remaining time duration for saving the QoE configuration.

In some embodiments, the transmitting the first information to the first node in step S51 includes: transmitting an RRC message to the first node, where the RRC message includes the first information.

Embodiments of the present invention provide an information processing method, which is performed by a UE and includes: transmitting an RRC message to a first node, where the RRC message includes first information.

The RRC message includes but is not limited to one of the following: an RRC establishment complete message, an RRC resume complete message, a UE information feedback message, or an RRC reestablishment complete message.

As shown in FIG. 6, embodiments of the present invention provide an information processing method, which is performed by a UE and includes the following steps.

Step S61: second information transmitted by a second node is received, where the second information is used to indicate relevant information about a QoE configuration.

Step S62: in a case that the UE enters an RRC idle state or an RRC inactive state, the second information is saved.

In the present invention, "save" may also be understood as "do not release".

In some embodiments of the present invention, the second information may be the second information in the above embodiments.

Illustratively, the second information includes at least one of the following:
identification information of the second node;
a CGI;
a C-RNTI;
a QoE reference;
a UE APP ID;
time-related information; or
a configuration priority, used to indicate a priority of the QoE configuration.

Illustratively, the second information may include, but is not limited to, at least one of the following: a CGI, a C-RNTI, area scope information, slice scope information, or service type information.

Illustratively, at least part of the second information is the same as at least part of the first information.

In the embodiments of the present invention, the UE can obtain the second information transmitted by the second node (such as the base station that last serves the UE), where the second information is used to indicate the relevant information about the QoE configuration, and the UE saves the second information when the UE enters the RRC idle state or the RRC inactive state. This is beneficial for the UE to transmit, when it enters the RRC connected state again, the second information to the first node (the new base station) to which it is connected.

Embodiments of the present invention provide an information processing method, which is performed by a UE and includes: determining first information based on second information.

In some embodiments, the determining the first information based on the second information includes one of the following:
determining the first information based on the second information after the UE switches from the RRC idle state or the RRC inactive state to the RRC connected state; or
determining the first information based on the second information during a process in which the UE switches from the RRC idle state or the RRC inactive state to the RRC connected state.

The present invention provides an information processing method, which is performed by a UE and includes one of the following:
determining first information based on second information after the UE switches from an RRC idle state or an RRC inactive state to an RRC connected state; or
determining first information based on second information during a process in which the UE switches from an RRC idle state or an RRC inactive state to an RRC connected state.

In the embodiments of the present invention, the first information may be determined based on the second information in a case that the state of the UE changes (for example, during or after the switch from the RRC idle state or the RRC inactive state to the RRC connected state). In this way, the first node obtains the QoE configuration or performs reconfiguration of the QoE configuration based on the first information, which reduces the impact of the change of the state of the UE on the QoE measurement.

For the above implementations, reference may be made to the description of the first node side, which is not further described herein.

It should be noted that those skilled in the art can understand that the method provided in the embodiments of the present invention may be performed alone or together with some methods in the embodiments of the present invention or some methods in related technologies.

Description of the information processing method described in the following, which is performed by a second node, is similar to the description of the information processing method performed by the first node and/or the UE in the above; in addition, for technical details not provided in the embodiments of the information processing method performed by the second node, reference is made to the description of the examples of the information processing method performed by the first node and/or the UE, which is not further described in detail herein.

As shown in FIG. 7, embodiments of the present invention provide an information processing method, which is performed by a second node and includes the following step.

Step S71: third information transmitted by a first node is received, where the third information is used to obtain a QoE configuration.

In some embodiments of the present invention, the first node and the second node are respectively the first node and the second node in the above embodiments; the third information may be the third information in the above embodiments; and the QoE configuration may be the QoE configuration in the above embodiments.

Illustratively, the first node is a first base station, and the second node is a second base station.

Illustratively, the first node is a first base station, and the second node is a core network device.

Illustratively, the first node is a first base station, and the second node is an OAM.

Illustratively, the first base station is a destination base station, and the second base station is a source base station; or the first base station is a master node (Master Node, MN), and the second base station is a secondary node (Secondary Node, SN); or the first base station and the second base station may be any two base stations.

Illustratively, the second node may be a base station that last serves the UE or a base station that transmits the QoE configuration to the UE.

Illustratively, the third information includes at least one of the following:
identification information of the second node;
a CGI;
a C-RNTI;
a QoE reference; or
a UE APP ID.

Illustratively, the third information includes but is not limited to at least one of the following: time-related information, area scope information, slice scope information, service range information, or a configuration priority.

Illustratively, at least part of the third information is the same as at least part of the first information.

In some embodiments, the third information is determined by the first node based on the first information, and the first information is information received by the first node from the UE; the first information is used to indicate the relevant information about the QoE configuration.

Embodiments of the present invention provide an information processing method, which is performed by a second node and includes: transmitting second information to a UE, where the second information is used to indicate relevant information about a QoE configuration, and the second information is used for the UE to determine the first information.

Embodiments of the present invention provide an information processing method, which is performed by a second node and includes: transmitting a QoE configuration to a first node.

In this way, the first node can obtain the QoE configuration configured by the second node for the UE.

In some embodiments, the QoE configuration includes a configuration priority, where the QoE configuration is used for the first node to determine whether to overwrite or reconfigure or release the QoE configuration.

For the above implementations, reference may be made to the description of the first node and/or UE side, which is not further described herein.

It should be noted that those skilled in the art can understand that the method provided in the embodiments of the present invention may be performed alone or together with some methods in the embodiments of the present invention or some methods in related technologies.

In order to further explain any embodiment of the present invention, a specific embodiment is provided in the following.

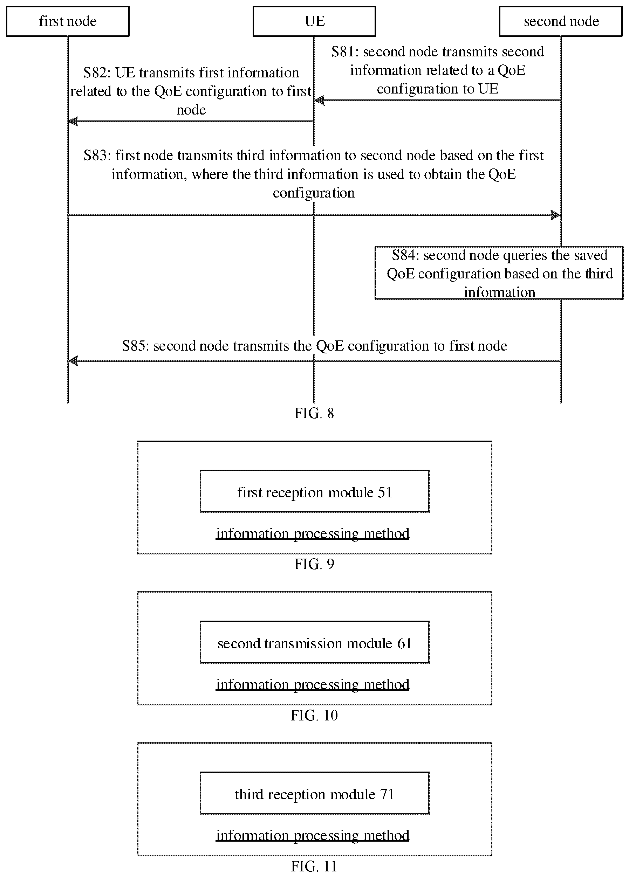

As shown in FIG. 8, embodiments of the present invention provide an information processing method, which is performed by a communication device, and the communication device includes a first node, a UE, and a second node. The information processing method includes the following steps.

Step S81: the second node transmits second information related to a QoE configuration to the UE.

Illustratively, the second node is a base station that last serves the UE or a base station that transmits the QoE configuration to the UE.

Illustratively, the second information includes but is not limited to at least one of the following: identification information of the second node, a CGI, a C-RNTI, a QoE reference, a UE APP ID, time-related information, or a configuration priority; where the time-related information includes: a configuration validity time, and/or a configuration remaining time.

The identification information of the second node and the CGI are used to indicate the second node that configures the QoE configuration for the UE and the ID corresponding to the cell, respectively. The second node saves the QoE configuration and the selected UE information.

The configuration validity time is used to indicate the time duration for the UE to save the QoE configuration after receiving the QoE configuration; or the configuration remaining time is used to indicate the remaining time duration for saving the QoE configuration.

The configuration priority is used to indicate a type of the QoE configuration; for example, it may be a type of "s-based" or "m-based". Or, the configuration priority may be a specific priority value; the magnitude of the priority value is positively correlated with the priority order; for example, a relatively larger priority value represents a relatively higher priority or a relatively smaller priority value represents a relatively lower priority.

In an optional embodiment, the content in the second information is configured per QoE reference and/or per UE APP ID.

In an optional embodiment, in a case that the UE enters the RRC idle state or the RRC inactive state, the UE saves the second information.

In an optional embodiment, the second node transmits an RRC message to the UE, where the RRC message includes the second information. The RRC message may be, but is not limited to, an RRC reconfiguration message or an RRC release message.

Step S82: the UE transmits first information related to the QoE configuration to the first node.

Illustratively, the first information includes but is not limited to at least one of the following: identification information of the second node, a CGI, a C-RNTI, a quality of experience reference, a UE APP ID, time-related information, area scope information, slice scope information, service type information, or a configuration priority, where the time-related information includes: a configuration validity time and/or a configuration remaining time.

In an optional embodiment, the first node determines based on the first information whether to obtain the QoE configuration and/or whether to perform reconfiguration or overwriting of the QoE configuration.

In an optional embodiment, the UE transmits an RRC message to the first node, where the RRC message includes the first information. The RRC message may be, but is not limited to, an RRC establishment complete message, an RRC resume complete message, a UE information feedback message, or an RRC reestablishment complete message.

Step S83: the first node transmits third information to the second node based on the first information, where the third information is used to obtain the QoE configuration;
If the first node determines, based on the first information, that the QoE configuration needs to be obtained, the first node transmits the third information to the second node.

Illustratively, the second node may be the second base station, the OAM or the core network device in the above embodiments.

Illustratively, the third information includes, but is not limited to, at least one of the following: identification information of the second node, a CGI, a C-RNTI, a QoE reference, or a UE APP ID.

In an optional embodiment, the first node determines, based on the identification information of the second node and/or the CGI, the second node to which the third information needs to be transmitted.

In an optional embodiment, the first node transmits an XnAP message to the second base station, where the XnAP message includes the third information. The XnAP message is a non-UE-related message.

In an optional embodiment, the first node transmits an NGAP message to the core network device, where the NGAP message includes the third information. The NGAP message is a UE-related message.

Step S84: the second node queries the saved QoE configuration based on the third information;
Step S85: the second node transmits the QoE configuration to the first node.

The QoE configuration is the QoE configuration obtained by the request based on the third information.

In an optional embodiment, the method may include: determining, by the first node, the QoE configuration as the context information of the UE, and determining, based on the context information, whether to reconfigure the QoE configuration for the UE (that is, whether to perform new QoE configuring for the UE).

In an optional embodiment, the second node determines, based on the third information, the QoE configuration that needs to be transmitted to the first node. Illustratively, the second node determines, based on the CGI and the C-RNTI, the QoE configuration that needs to be transmitted to the first node. Illustratively, the second node determines, based on the CGI, the C-RNTI and the UE APP ID, the QoE configuration that needs to be transmitted to the first node. Illustratively, the second node determines, based on the QoE reference, the QoE configuration that needs to be transmitted to the first node.

In an optional embodiment, the QoE configuration includes a configuration priority; and the second node determines, based on the configuration priority, whether to reconfigure and/or overwrite and/or release the QoE configuration.

In an optional embodiment, before step S83, the method may include: determining by the first node, based on the first information, whether to obtain the QoE configuration or whether to reconfigure and/or overwrite and/or release the QoE configuration.

For the above implementations, reference may made to the description of the first node and/or UE and/or second node side, which is not further described in detail herein.

It should be noted that those skilled in the art can understand that the method provided in the embodiments of the present invention may be performed alone or together with some methods in the embodiments of the present invention or some methods in related technologies.

As shown in FIG. 9, embodiments of the present invention provide an information processing device, including a first reception module 51.

The first reception module 51 is configured to receive first information transmitted by a UE, where the first information is used to indicate relevant information about a QoE configuration.

The information processing device provided by the embodiments of the present invention may be a first node.

In some embodiments, the first node is a first base station, and the second node is a second base station; or,
the first node is a first base station, and the second node is a core network device; or,
the first node is a first base station, and the second node is an OAM.

In some embodiments, the first information is determined by the UE based on second information, the second information is used to indicate the relevant information about the QoE configuration, and the second information is received by the UE from a second node.

In some embodiments, the first information includes at least one of the following:
identification information of a second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

In some embodiments, the time-related information includes at least one of the following:
a configuration validity time, used to indicate a time duration that the UE saves the QoE configuration after receiving it; or
a configuration remaining time, used to indicate a remaining time duration for saving the QoE configuration.

In some embodiments, the second information includes at least one of the following:
identification information of the second node;
a CGI;
a C-RNTI;
a QoE reference;
a UE APP ID;
time-related information; or
a configuration priority, used to indicate a priority of the QoE configuration.

In some embodiments, the device includes a first processing module, configured to perform at least one of the following:
determining, based on the first information, whether the QoE configuration needs to be obtained; or,
determining, based on the first information, whether to perform overwriting or reconfiguration of the QoE configuration.

Embodiments of the present invention provide an information processing device, including: a first transmission module, configured to transmit third information to a second node, where the third information is used to obtain a QoE configuration.

Embodiments of the present invention provide an information processing device, including: a first transmission module, configured to determine, based on first information, that a QoE configuration needs to be obtained, and transmit third information to a second node.

Embodiments of the present invention provide an information processing device, including: a first reception module, configured to receive a QoE configuration transmitted by a second node.

In some embodiments, the QoE configuration includes a configuration priority and the first processing module is configured to determine, based on the configuration priority, whether to perform overwriting or reconfiguration of the QoE configuration.

Embodiments of the present invention provide an information processing device, including: a first processing module, configured to determine whether to perform overwriting or reconfiguration of a QoE configuration based on a configuration priority.

In some embodiments, the third information includes at least one of the following:
identification information of the second node;
a CGI;
a C-RNTI;
a QoE reference; or
a UE APP ID.

As shown in FIG. 10, embodiments of the present invention provide an information processing device, including a second transmission module 61.

The second transmission module 61 is configured to transmit first information to a first node, where the first information is used to indicate relevant information about a QoE configuration.

The information processing device provided by the embodiments of the present invention may be a UE.

The present invention provides an information processing device, including:
a second reception module, configured to receive second information transmitted by a second node, where the second information is used to indicate the relevant information about the QoE configuration; and
a second processing module, configured to save the second information in a case that the UE enters an RRC idle state or an RRC inactive state.

In some embodiments, the first node is a first base station, and the second node is a second base station; or,
the first node is a first base station, and the second node is a core network device; or,
the first node is a first base station, and the second node is an OAM.

The present invention provides an information processing device, including:
a second processing module, configured to determine the first information based on the second information after the UE switches from the RRC idle state or the RRC inactive state to the RRC connected state; or
a second processing module, configured to determine the first information based on the second information during the process in which the UE switches from the RRC idle state or the RRC inactive state to the RRC connected state.

In some embodiments, the first information includes at least one of the following:
identification information of the second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

In some embodiments, the time-related information includes at least one of the following:
a configuration validity time, used to indicate a time duration that the UE saves the QoE configuration after receiving it; or
a configuration remaining time, used to indicate a remaining time duration for saving the QoE configuration.

In some embodiments, the second information includes at least one of the following:
identification information of the second node;
a CGI;
a C-RNTI;
a QoE reference;
a UE APP ID;
time-related information; or
a configuration priority, used to indicate a priority of the QoE configuration.

As shown in FIG. 11, embodiments of the present invention provide an information processing device, including a third reception module 71.

The third reception module 71 is configured to receive third information transmitted by a first node, where the third information is used to obtain a QoE configuration.

The information processing device provided by the embodiments of the present invention may be a second node.

In some embodiments, the third information is determined by the first node based on first information, the first information is received by the first node from a UE, and the first information is used to indicate relevant information about the QoE configuration.

Embodiments of the present invention provide an information processing device, including: a third transmission module, configured to transmit second information to a UE, where the second information is used to indicate relevant information about a QoE configuration, and the second information is used for the UE to determine first information.

In some embodiments, the first node is a first base station, and the second node is a second base station; or,
the first node is a first base station, and the second node is a core network device; or,
the first node is a first base station, and the second node is an OAM.

Embodiments of the present invention provide an information processing device, including: a third transmission module, configured to transmit a QoE configuration to a first node.

In some embodiments, the QoE configuration includes a configuration priority, where the QoE configuration is used by the first node to determine whether to perform overwriting or reconfiguration of the QoE configuration.

In some embodiments, the third information includes at least one of the following:
identification information of the second node;
a CGI;
a C-RNTI;
a QoE reference; or
a UE APP ID.

It should be noted that those skilled in the art can understand that the device provided in the embodiments of the present invention may be implemented alone or together with some devices in the embodiments of the present invention or some devices in related technologies.

Regarding the device in the above embodiments, the specific manner in which each module performs operations is described in detail in the embodiments of the method, which will not be further described herein.

The present invention provides a communication device, including:
a processor; and
a memory, configured to store processor executable instructions;
where the processor is configured to perform the information processing method of any embodiment of the present invention when executing the executable instructions.

In an embodiment, the communication device may include but is not limited to at least one of: a UE or a network device. The network device includes a base station.

The processor may include any type of storage medium, and the storage medium is a non-transitory computer storage media configured to retain information stored thereon after power loss to the user equipment.

The processor may be connected to the memory via a bus or the like, and may be configured to read the executable program stored in the memory, for example, at least one of the methods shown in FIG. 2 to FIG. 8.

Embodiments of the present invention further provide a computer storage medium, which stores a computer executable program. When the executable program is executed by a processor, the information processing method according to any embodiment of the present invention is performed, for example, at least one of the methods shown in FIG. 2 to FIG. 8.

Regarding the device or storage medium in the above embodiments, the specific manner in which each module performs the operations has been described in detail in the embodiments of the method, which will not be described in detail herein.

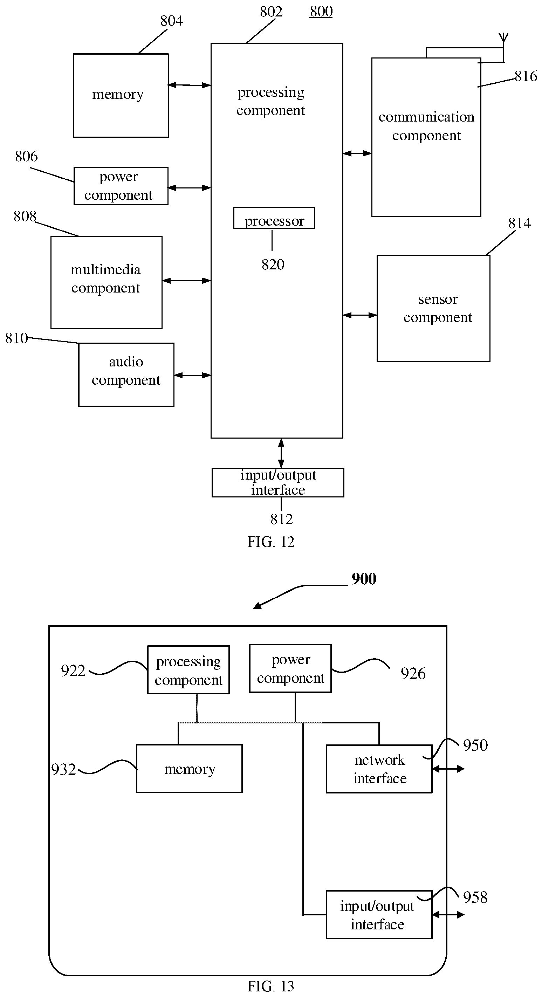

FIG. 12 is a block diagram of a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 12, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 4G, or 5G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the UE 800 may be implemented with one or more of an application specific integrated circuits (ASIC), a digital signal processor (DSP), a digital signal processing device (DSPD), a programmable logic device (PLD), a field programmable gate array (FPGA), a controller, a microcontroller, a microprocessor, or other electronic elements, for performing the above-mentioned method.

In an illustrative embodiment, there is also provided a non-transitory computer readable storage medium including instructions, such as included in the memory 804, executable by the processor 820 in the UE 800, for completing the above-mentioned method. For example, the non-transitory computer-readable storage medium may be a ROM, a random access memory (RAM), a CD-ROM, a magnetic tape, a floppy disc, an optical data storage device, and the like.

As shown in FIG. 13, embodiments of the present invention provide a structure of a base station. For example, the base station 900 may be provided as a network device. Referring to FIG. 13, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any method applied to the base station as described above.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server ^{™}, Mac OS ^{XTM}, Unix^{™,} Linux^{™,} FreeBSD^{™}, or the like.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the scope of the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the scope of the appended claims.

## Claims

1. An information processing method, performed by a first node, comprising:
receiving first information transmitted by a user equipment (UE), wherein the first information is used to indicate relevant information about a quality of experience (QoE) configuration.

2. The information processing method according to claim 1, wherein the first information is determined by the UE based on second information, the second information is used to indicate the relevant information about the QoE configuration, and the second information is received by the UE from a second node.

3. The information processing method according to claim 1 or claim 2, wherein the first information comprises at least one of:
identification information of a second node;
a cell global identification (CGI);
a cell radio network temporary identifier (C-RNTI);
a QoE reference;
a measurement configuration application layer identifier (UE APP ID);
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

4. The information processing method according to claim 3, wherein the time-related information comprises at least one of:
a configuration validity time, used to indicate a time duration that the UE saves the QoE configuration after receiving the QoE configuration; or
a configuration remaining time, used to indicate a remaining time duration for saving the QoE configuration.

5. The information processing method according to claim 2, wherein the second information comprises at least one of:
identification information of the second node;
a CGI;
a C-RNTI;
a QoE reference;
a UE APP ID;
time-related information; or
a configuration priority, used to indicate a priority of the QoE configuration.

6. The information processing method according to claim 1 or claim 2, comprising at least one of:
determining, based on the first information, whether the QoE configuration needs to be obtained; or
determining, based on the first information, whether to perform overwriting or reconfiguration of the QoE configuration.

7. The information processing method according to claim 1 or claim 2, comprising:
transmitting third information to a second node, wherein the third information is used to obtain the QoE configuration.

8. The information processing method according to claim 7, wherein transmitting the third information to the second node comprises:
determining, based on the first information, that the QoE configuration needs to be obtained, and transmitting the third information to the second node.

9. The information processing method according to claim 8, comprising:
receiving the QoE configuration transmitted by the second node.

10. The information processing method according to claim 9, wherein the QoE configuration comprises a configuration priority;
wherein the information processing method comprises:
determining, based on the configuration priority, whether to perform overwriting or reconfiguration of the QoE configuration.

11. The information processing method according to claim 7, wherein the third information comprises at least one of:
identification information of the second node;
a CGI;
a C-RNTI;
a QoE reference; or
a UE APP ID.

12. The information processing method according to claim 1 or claim 2, wherein
the first node is a first base station, and a second node is a second base station; or
the first node is a first base station, and the second node is a core network device; or
the first node is a first base station, and the second node is an operation administration and maintenance (OAM).

13. An information processing method, performed by a UE, comprising:
transmitting first information to a first node, wherein the first information is used to indicate relevant information about a QoE configuration.

14. The information processing method according to claim 13, comprising:
receiving second information transmitted by a second node, wherein the second information is used to indicate the relevant information about the QoE configuration; and
saving the second information in a case that the UE enters an RRC idle state or an RRC inactive state.

15. The information processing method according to claim 14, comprising:
determining the first information based on the second information in a case that the UE switches from the RRC idle state or the RRC inactive state to an RRC connected state.

16. The information processing method according to any one of claims 13 to 15, wherein the first information comprises at least one of:
identification information of a second node;
a CGI;
a C-RNTI;
a QoE reference;
a UE APP ID;
time-related information;
area scope information, used to indicate an area scope of the QoE configuration;
slice scope information, used to indicate a slice scope of the QoE configuration;
service type information, used to indicate a service type of the QoE configuration; or
a configuration priority, used to indicate a priority of the QoE configuration.

17. The information processing method according to claim 16, wherein the time-related information comprises at least one of:
a configuration validity time, used to indicate a time duration that the UE saves the QoE configuration after receiving the QoE configuration; or
a configuration remaining time, used to indicate a remaining time duration for saving the QoE configuration.

18. The information processing method according to claim 14 or claim 15, wherein the second information comprises at least one of:
identification information of the second node;
a CGI;
a QoE reference;
a UE APP ID;
time-related information; or
a configuration priority, used to indicate a priority of the QoE configuration.

19. The information processing method according to any one of claims 13 to 15, wherein:
the first node is a first base station, and a second node is a second base station; or
the first node is a first base station, and the second node is a core network device; or
the first node is a first base station, and the second node is an OAM.

20. An information processing method, performed by a second node, comprising:
receiving third information transmitted by a first node, wherein the third information is used to obtain a QoE configuration.

21. The information processing method according to claim 20, wherein the third information is determined by the first node based on first information, the first information is received by the first node from a UE, and the first information is used to indicate relevant information about the QoE configuration.

22. The information processing method according to claim 21, comprising:
transmitting second information to the UE, wherein the second information is used to indicate the relevant information about the QoE configuration, and the second information is used for the UE to determine the first information.

23. The information processing method according to any one of claims 20 to 22, comprising:
transmitting the QoE configuration to the first node.

24. The information processing method according to claim 23, wherein the QoE configuration comprises a configuration priority, and the QoE configuration is used for the first node to determine whether to perform overwriting or reconfiguration of the QoE configuration.

25. The information processing method according to any one of claims 20 to 22, wherein the third information comprises at least one of:
identification information of the second node;
a CGI;
a C-RNTI;
a QoE reference; or
a UE APP ID.

26. The information processing method according to any one of claims 20 to 22, wherein:
the first node is a first base station, and the second node is a second base station; or
the first node is a first base station, and the second node is a core network device; or
the first node is a first base station, and the second node is an OAM.

27. An information processing device, comprising:
a first reception module, configured to receive first information transmitted by a UE, wherein the first information is used to indicate relevant information about a QoE configuration.

28. An information processing device, comprising:
a second transmission module, configured to transmit first information to a first node, wherein the first information is used to indicate relevant information about a QoE configuration.

29. An information processing device, comprising:
a third reception module, configured to receive third information transmitted by a first node, wherein the third information is used to obtain a QoE configuration.

30. A communication device, comprising:
a processor; and
a memory, configured to store processor executable instructions;
wherein the processor is configured to perform the information processing method according to any one of claims 1 to 12, or claims 13 to 19, or claims 20 to 26 when executing the processor executable instructions.

31. A computer storage medium, having a computer executable program stored thereon, wherein when the computer executable program is executed by a processor, the information processing method according to any one of claims 1 to 12, or claims 13 to 19, or claims 20 to 26 is performed.
